# EUROPEAN PATENT APPLICATION

(11) **EP 4 607 252 A1**
(43) Date of publication of application: **27.08.2025**
(21) Application number: 25158754.9
(22) Date of filing: 19.02.2025
(51) Int. Cl.: G02B 5/18, G02B 27/00, G02B 27/01

(54) **OPTICAL APPARATUS, MODULES AND DEVICES**

(30) Priority: 23.02.2024 GB 202402600
(71) Applicant: Nokia Technologies Oy, 02610 Espoo (FI)
(72) Inventor: JÄRVENPÄÄ, Toni Johan, Akaa (FI)
(74) Representative: Nokia EPO representatives

(57) **Abstract**

Examples of the disclosure relate to optical apparatus. The apparatus comprises a light guiding means. The light guiding means comprises at least; first in-coupling diffractive means, first expanding diffractive means and second expanding diffractive means, second in-coupling diffractive means, and one or more out-coupling diffractive means. The first in-coupling diffractive means are configured to in-couple one or more input beams of light into the light guiding means. The first expanding diffractive means and second expanding diffractive means are configured to expand the one or more input beams of light wherein the first expanding diffractive means is provided on a first side of the first in-coupling diffractive means and the second expanding diffractive means is provided on a second side of the first in-coupling diffractive means. The second in-coupling diffractive means are configured to in-couple one or more input beams of light into the light guiding means. The one or more out-coupling diffractive means are configured to out-couple light from the first expanding diffractive means, the second expanding diffractive means and the second in-coupling diffractive means.

## Description

### TECHNOLOGICAL FIELD

Examples of the disclosure relate to optical apparatus, modules and devices. Some relate to optical apparatus, modules and devices for providing a more uniform output.

### BACKGROUND

Optical apparatus, such as exit pupil expanders, can be used in display systems and devices such as near eye displays, augmented and/or virtual reality headsets and head up displays for example.

### BRIEF SUMMARY

According to various, but not necessarily all, examples of the disclosure there is provided an apparatus comprising:
a light guiding means wherein the light guiding means comprises at least;
first in-coupling diffractive means configured to in-couple one or more input beams of light into the light guiding means,
first expanding diffractive means and second expanding diffractive means configured to expand the one or more input beams of light wherein the first expanding diffractive means is provided on a first side of the first in-coupling diffractive means and the second expanding diffractive means is provided on a second side of the first in-coupling diffractive means,
second in-coupling diffractive means configured to in-couple one or more input beams of light into the light guiding means, and
one or more out-coupling diffractive means configured to out-couple light from the first expanding diffractive means, the second expanding diffractive means and the second in-coupling diffractive means.

The one or more out-coupling diffractive means may comprise a central region and two edge regions and light from the first expanding diffractive means is incident on a first edge region, light from the second expanding diffractive means is incident on a second edge region, and light from the second in-coupling diffractive means is incident on the central region.

A diffractive grating of the second in-coupling diffractive means may be provided at a perpendicular orientation to the diffractive grating of the first in-coupling diffractive means.

The second in-coupling diffractive means may be aligned with the first in-coupling diffractive means.

The second expanding diffractive means may be symmetrical to the first expanding diffractive means.

The light guiding means may comprise at least one layer and the first in-coupling diffractive means is provided on a first surface of the at least one layer and the second in-coupling diffractive means is provided on a second surface of the at least one layer.

The light guiding means may comprise at least a first layer and a second layer wherein the first in-coupling diffractive means is provided on a surface of the first layer and the second in-coupling diffractive means is provided on a surface of the second layer.

The first and second layers may be arranged so that the first in-coupling diffractive means and the second in-coupling diffractive means are adjacent to each other.

The first expanding diffractive means, the second expanding diffractive means and the out-coupling diffractive means may be provided on the first layer of the light guiding means.

The first expanding diffractive means, the second expanding diffractive means and edge regions of the one or more out-coupling diffractive means may be provided on the first layer of the light guiding means and a central region of the one or more out-coupling diffractive means is provided on the second layer of the light guiding means.

The light guiding means may comprise a stack of layers wherein respective layers within the stack are arranged to enable beams of light comprising at least light having a first wavelength and light having a second wavelength to be guided through the light guiding means via internal reflections wherein the second wavelength is shorter than the first wavelength, and
the stack also comprises an interface between layers wherein the interface is configured to reflect light having the first wavelength and allow light having the second wavelength to pass through; and,
wherein at least one of the relative thicknesses of the respective layers and the refractive indices of the respective layers are arranged so that the light having the second wavelength undergoes fewer internal reflections than the light having the first wavelength as the light is guided from the first in-coupling diffractive means or the second in-coupling diffractive means towards the one or more out-coupling diffractive means.

The first in-coupling diffractive means and at least part of the one or more out-coupling diffractive means may be provided on a surface of a layer in the stack of layers.

The second in-coupling diffractive means and at least part of the one or more out-coupling diffractive means may be provided on a surface of a layer in the stack of layers.

The apparatus may comprise a thin film material at the interfaces between respective layers of the stack of layers.

The apparatus may comprise one of more filters configured to filter a beam of light and provide the filtered beam of the light to the second in-coupling diffractive means.

According to various, but not necessarily all, examples of the disclosure there is provided an apparatus comprising:
a light guide wherein the light guide comprises at least;
first diffractive in-coupler configured to in-couple one or more input beams of light into the light guide,
first diffractive expander and second diffractive expander configured to expand the one or more input beams of light wherein the first diffractive expander is provided on a first side of the first diffractive in-coupler and the second diffractive expander is provided on a second side of the first diffractive in-coupler,
second diffractive in-coupler configured to in-couple one or more input beams of light into the light guide, and
one or more diffractive out-coupler configured to out-couple light from the first diffractive in-coupler, the second diffractive expander and the second diffractive in-coupler.

According to various, but not necessarily all, examples of the disclosure there is provided a module, a device, a headset, a vehicle or cab for a vehicle comprising an apparatus as described herein.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function

### BRIEF DESCRIPTION

Some examples will now be described with reference to the accompanying drawings in which:
FIGS. 1A to 1F show an example apparatus;
FIGS. 2A to 2F show an example apparatus;
FIGS. 3A to 3F example outputs;
FIGS. 4A to 4G show an example apparatus;
FIGS. 5A to 5G show an example apparatus;
FIGS. 6A to 6F show an example apparatus;
FIGS. 7A to 7G show an example apparatus;
FIGS. 8A to 8F show an example apparatus;
FIGS. 9A to 9F show an example apparatus;
FIGS. 10A to 10F show an example apparatus;
FIGS. 11A to 11F show an example apparatus;
FIGS. 12A to 12F shows an example apparatus;
FIGS. 13A to 13D show example expanding diffractive means;
FIG. 14 shows an example optical path; and
FIG. 15 shows an example optical path.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

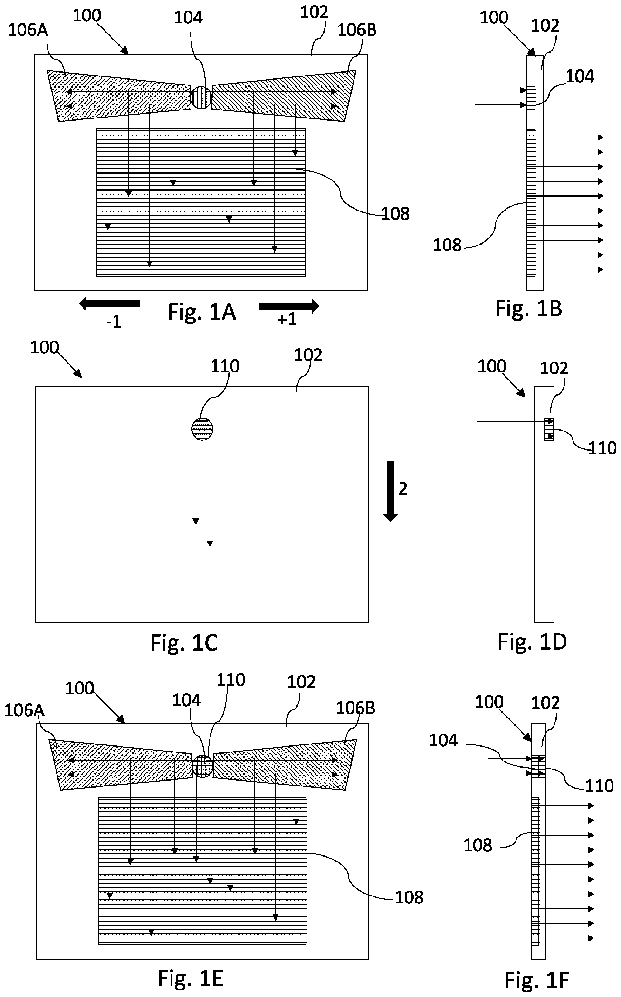

Figs. 1A to 1F show an example apparatus 100 that can be used in examples of the disclosure. The apparatus 100 can be used as a light guide for providing images. The apparatus 100 can be provided within a module, a device, a headset, a vehicle, a cab for a vehicle, or in any other suitable arrangement.

The apparatus 100 comprises light guiding means 102. The light guiding means 102 can be formed on a waveguide, an optical substrate, a transparent plate or any other suitable material. Figs. 1A to 1F show different views and components of the light guiding means 102.

In this example the light guiding means 102 comprises an exit pupil expander. The exit pupil expander is configured to increase the size of an exit pupil from a light engine or other optical arrangement. The light engine could be a display means such as a light engine, projection engine, or a picture generating unit.

In the example of Figs. 1A to 1F the light guiding means 102 comprises a single layer. The light guiding means 102 can comprise multiple layers in other examples.

The light guiding means 102 comprises first in-coupling diffractive means 104, first expanding diffractive means 106A, second expanding diffractive means 106B and out-coupling diffractive means 108. The first in-coupling diffractive means 104, first expanding diffractive means 106A, second expanding diffractive means 106B and out-coupling diffractive means 108 are shown in Figs. 1A and 1B. Fig. 1A shows a plan view of the light guiding means 102 and Fig. 1B shows a cross section of the light guiding means 102. In Figs. 1A and 1B only the first in-coupling diffractive means 104, first expanding diffractive means 106A, second expanding diffractive means 106B and out-coupling diffractive means 108 are shown for clarity. The light guiding means 102 can comprise other components that are not shown in Figs. 1A and 1B.

The first in-coupling diffractive means 104 comprises any means that is configured to in-couple one or more input beams of light into the light guiding means 102. The input beams of light can be provided from a light engine or any other suitable source. The first in-coupling diffractive means 104 is positioned within the light guiding means 102 so that, in use, the first in-coupling diffractive means 104 can be positioned adjacent to a light engine or any other suitable source.

In the example of Fig. 1A the first in-coupling diffractive means 104 is located in a central position on a first surface of the light guiding means 102. The first in-coupling diffractive means 104 could be located in other locations in other examples.

In the example of Fig. 1A the first in-coupling diffractive means 104 has a vertical diffractive grating. Other arrangements for the first in-coupling diffractive means 104 could be used in other examples.

In the example of Fig. 1A the first in-coupling diffractive means 104 has a circular shape. Other shapes could be used for the first in-coupling diffractive means 104 in other examples.

The light guiding means 102 is configured so that the in-coupled beams of light travel inside the light guiding means 102 via total internal reflection. The total internal reflection angles are determined by the refractive index of the material that is used for the light guiding means 102, the wavelength of the in-coupled beams, the parameters of the first in-coupling diffractive means 104, and any other relevant factors.

The first expanding diffractive means 106A and the second expanding diffractive means 106B are positioned within the light guiding means 102 so that the in-coupled beam of light is provided from the first in-coupling diffractive means 104 to the first expanding diffractive means 106A and the second expanding diffractive means 106B. Some of the input beam of light is provided from the first in-coupling diffractive means 104 to the first expanding diffractive means 106A and some of the input beam of light is provided from the first in-coupling diffractive means 104 to the second expanding diffractive means 106B. In the example of Figs. 1A to 1F equal parts, or substantially equal parts, of the input beams are provided to the respective expanding diffractive means 106A, 106B.

The first expanding diffractive means 106A is provided on a first side of the first in-coupling means 104 and the second expanding diffractive means 106B is provided on a second side of the first in-coupling means 104. In the example of Figs. 1A to 1F the first expanding diffractive means 106A is provided on the left hand side of the first in-coupling diffractive means 104 and the second expanding diffractive means 106B is provided on the right hand side of the first in-coupling diffractive means 104. In the example of Figs. 1A to 1F the first expanding diffractive means 106A is symmetrical to the second expanding diffractive means 106B. Other arrangements can be used in other examples.

The respective expanding diffractive means 106A, 106B comprise any means that are configured to expand the in-coupled beam of light in at least one dimension. The expanding diffractive means 106A, 106B can comprise a diffractive means such as a diffraction grating or any other suitable means. In the diffraction grating the in-coupled beam of light is split into two with every interaction with the diffraction grating. The interaction could be, for example, an internal reflection. The two split sections of the beam travel in different directions and continue splitting and so expand the exit pupil of the light engine. In the example shown in Figs. 1A to 1F the respective expanding diffractive means 106A, 106B comprise gratings which expands the beams of light in a horizontal direction. The horizontal direction is indicated by the arrows -1 and +1 in Fig. 1A. Other arrangements can be used in other examples.

The out-coupling diffractive means 108 is positioned within the light guiding means 102 so that the horizontally expanded beams of light from the respective expanding diffractive means 106A, 106B are provided to the out-coupling diffractive means 108.

The expanded beams of light from the expanding diffractive means 106A, 106B are provided to edge regions of the out-coupling diffractive means 108. The edge regions can comprise regions of the out-coupling diffractive means 108 that are underneath the expanding diffractive means 106A, 106B but that are not underneath the first in-coupling diffractive means 102. Light from the first expanding diffractive means 106A is incident on a first edge region and light from the second expanding diffractive means 106B is incident on a second edge region. In this example the first region comprises a region towards the left hand side of the out-coupling diffractive means 108 and the second region comprises a region towards the right hand side of the in-coupling diffractive means 108.

The out-coupling diffractive means 108 comprises any means that is configured to out-couple the horizontally expanded light beam out of the light guiding means 102. The out-coupling diffractive means 108 can function in a similar manner to the expanding diffractive means 106A, 106B so that the expanded beam of light is split into two with every interaction with the diffraction grating. The out-coupling diffractive means 108 can also be configured to expand the horizontally expanded beam of light in a second dimension. In the example shown in Fig. 1A to 1F the out-coupling diffractive means 108 comprises horizontal grating lines which expand the horizontally expanded beam in the vertical direction.

The light guiding means 102 is configured so that the out-coupled expanded beam of light can be viewed by a user. The out-coupled expanded beams of light provide a virtual image that can be observed by a user. The out-coupled beam of light therefore provides an expanded exit pupil. In other words, the first in-coupling means 104 defines an entrance pupil for the light guiding means 102, and the expanding diffractive means 106A, 106B and the out-coupling diffractive means 108 replicate the pupil in two directions so, that the out-coupled beam of light consists of many overlapping exit pupils.

The first in-coupling diffractive means 104, first expanding diffractive means 106A, second expanding diffractive means 106B and out-coupling diffractive means 108 are located on a surface of or inside the volume of the light guiding means 102. The first in-coupling diffractive means 104, first expanding diffractive means 106A, second expanding diffractive means 106B and out-coupling diffractive means 108 are all located within the same plane in the light guiding means 102. In the example of Figs. 1A and 1B, the first in-coupling diffractive means 104, first expanding diffractive means 106A, second expanding diffractive means 106B and out-coupling diffractive means 108 are located on a first surface of the light guiding means 102.

The light guiding means 102 also comprises a second in-coupling diffractive means 110. The second in-coupling diffractive means 110 are shown in Figs. 1C and 1D. The second in-coupling diffractive means 110 are not shown in Figs. 1A and 1B. Fig. 1C shows a plan view of the light guiding means 102 and Fig. 1D shows a cross section of the light guiding means 102. In Figs. 1C and 1D only the second in-coupling diffractive means 110 are shown for clarity. The light guiding means 102 can comprise other components that are not shown in Figs. 1C and 1D.

The second in-coupling diffractive means 110 comprises any means that is configured to in-couple one or more input beams of light into the light guiding means 102. The second in-coupling diffractive means 110 is provided in a different plane of the light guiding means 102 to the first in-coupling diffractive means 104.

The second in-coupling diffractive means 110 is located in the light guiding means 102 so that the second in-coupling diffractive means 110 at least partially overlaps with the first in-coupling diffractive means 104. In the example of Fig. 1C the second in-coupling diffractive means 110 is located in a central position on a second surface of the light guiding means 102. The second in-coupling diffractive means 110 could be located in other locations in other examples.

The second in-coupling diffractive means 110 can comprise a diffractive grating that is arranged in a perpendicular orientation to the diffractive grating of the first in-coupling diffractive means 104. In the example of Fig. 1C the second in-coupling diffractive means 110 has a horizontal diffractive grating. Other arrangements for the respective in-coupling diffractive means 104, 110 could be used in other examples.

The diffractive grating used for the second in-coupling diffractive means 110 can have the same period, and/or any other parameters, as the diffractive gratings used for the first in-coupling diffractive means 104. The diffractive grating used in the second in-coupling diffractive means 110 can have the same period, orientation, and/or any other parameters, as the diffractive gratings used for the out-coupling diffractive means 108.

In the example of Fig. 1C, the second in-coupling diffractive means 110 has a circular shape. The second in-coupling diffractive means 110 has the same shape as the first in-coupling diffractive means 104. In the example of Figs. 1A to 1F the second in-coupling diffractive means 110 has the same size, or substantially the same size, as the first in-coupling diffractive means 104. Other shapes and sizes could be used for the respective in-coupling diffractive means 104, 110 in other examples.

The in-coupled beam of light travels from the second in-coupling diffractive means 110 inside the light guiding means 102 via total internal reflection. The total internal reflection angles are determined by the refractive index of the material that is used for the light guiding means 102, the wavelength of the in-coupled beam, the parameters of the second in-coupling diffractive means 110, and any other relevant factors.

The second in-coupling diffractive means 110 is located within the light guiding means 102 so that the in-coupled beam of light travels from the second in-coupling diffractive means 110 to the out-coupling diffractive means 108. This is indicated by the arrow 2 in Fig. 1C.

The in-coupled beam of light from the second in-coupling diffractive means 110 that is provided to the out-coupling diffractive means 108 can be provided to a central region of the out-coupling diffractive means 108. The central region of the out-coupling diffractive means 108 can be positioned underneath the first in-coupling diffractive means 104. Therefore, the out-coupling diffractive means 108 is configured to outcouple both light from the expanding diffractive means 106A, 106B and light from the second in-coupling diffractive means 110.

The second in-coupling diffractive means 110 can be provided on a surface of, or inside the volume of, the light guiding means 102. The second in-coupling diffractive means 108 is provided on a different surface to the first in-coupling diffractive means 104, the first expanding diffractive means 106A, the second expanding diffractive means 106B and at least some of the out-coupling diffractive means 108.

In the example of Figs 1A to 1F the light guiding means 102 comprises a single layer. The first in-coupling diffractive means 104, the first expanding diffractive means 106A, the second expanding diffractive means 106B and the out-coupling diffractive means 108 are provided on a first surface of the single layer. The second in-coupling diffractive means 108 is provided on a second surface of the single layer. The second surface opposes the first layer. The second surface is parallel, or substantially parallel to the first layer.

Figs. 1E and 1F show how the first in-coupling diffractive means 104, the first expanding diffractive means 106A, the second expanding diffractive means 106B and the out-coupling diffractive means 108 and the second in-coupling diffractive means 110 would be combined on the light guiding means 102.

The second in-coupling diffractive means 110 is provided behind the first in-coupling diffractive means 104. The second in-coupling diffractive means 110 is aligned with the first in-coupling diffractive means 104. In this example the second in-coupling diffractive means 110 is provided on a different surface to the first in-coupling diffractive means 104, the first expanding diffractive means 106A, the second expanding diffractive means 106B and the out-coupling diffractive means 108. Other arrangements for the respective components can be used in other examples.

The diffractive means that are used for the first in-coupling diffractive means 104, first expanding diffractive means 106A, second expanding diffractive means 106B, out-coupling diffractive means 108, and second in-coupling diffractive means 110 can comprise any means that can be configured to diffract the input beams of light. The diffractive means can comprise any one or more of a diffractive optical element, diffractive structure, diffraction gratings, holographic gratings, Bragg gratings, rulings, ridges, surface relief diffractive gratings, volume holograms, or any suitable optical component or feature having a periodic structure that splits and diffracts light into several beams travelling in different directions.

The apparatus 100 could comprise other components that are not shown in Figs. 1A to 1E. For example, the apparatus 100 could comprise one of more filters configured to filter a beam of light and provide the filtered beam of the light to the second in-coupling diffractive means 110.

When the apparatus 100 is in use an input beam of light is input to the apparatus 100 and an expanded beam of light is output by the apparatus 100. The use of the two expanding means 106A, 106B enables both the input beam of light that is directed towards the right hand side and the input beam of light that is directed to the left hand side to be expanded and used. This provides for an efficient apparatus.

Further, the use of the second in-coupling diffractive means 110 enables light to be provided to a central region of the out-coupling diffractive means 108. This can reduce a dark band that might otherwise be visible in the output. This can provide for a more uniform output.

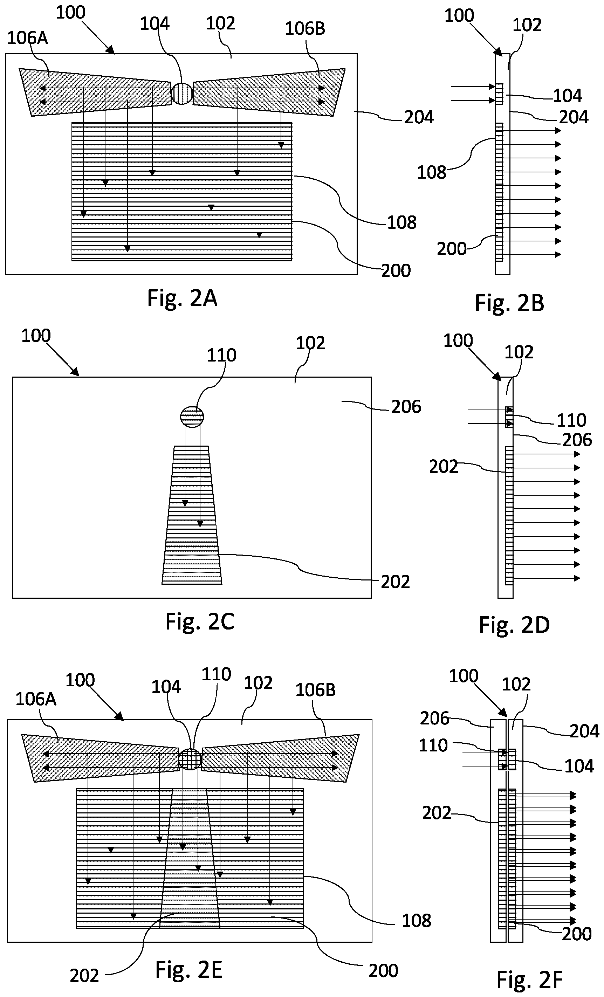

Figs. 2A to 2F show another example apparatus 100. The example apparatus 100 is similar to the apparatus 100 of Figs. 1A to 1F and corresponding reference numerals are used for corresponding features.

The apparatus in Figs. 2A to 2F comprises light guiding means 102. The light guiding means 102 in Figs. 2A to 2F differs from the light guiding means 102 in Figs. 1A to 1F in that in Figs. 2A to 2F the light guiding means 102 comprises a first layer 204 and a second layer 206.

The apparatus 100 in Figs. 2A to 2F also comprises first in-coupling diffractive means 104, first expanding diffractive means 106A, second expanding diffractive means 106B, second in-coupling diffractive means 110 and out-coupling diffractive means 108.

In this example the first in-coupling diffractive means 104 is provided on a surface of the first layer 204 of the light guiding means 102 and the second in-coupling diffractive means 110 is provided on a surface of the second layer 206 of the light guiding means 102.

Figs. 2A and 2B show the first layer 204 of the light guiding means 102. The first in-coupling diffractive means 104, first expanding diffractive means 106A, second expanding diffractive means 106B can be arranged as shown in Figs. 1A and 1B.

A first portion 200 of the out-coupling diffractive means 108 is also provided on the surface of the first layer 204. This first portion 200 of the out-coupling diffractive means 108 can be arranged as shown in Figs. 1A and 1B. The first portion 200 of the out-coupling diffractive means 108 extends across the surface of the first layer 204 so that light outcoupled from the respective expanding diffractive means 106A, 106B is provided to first portion 200 of the out-coupling diffractive means 108. In this example the first portion 200 of the out-coupling diffractive means 108 is rectangular. Other shapes can be used in other examples.

Figs. 2C and 2D show the second layer 206 of the light guiding means 102. The second in-coupling diffractive means 110 and a second portion 202 of the out-coupling diffractive means 108 are provided on a surface of the second layer 206.

The second in-coupling diffractive means 110 can be arranged as shown in Figs. 1C and 1D.

The second portion 202 of the out-coupling diffractive means 108 is positioned within the light guiding means 102 so that the in-coupled beams of light from the second in-coupling diffractive means 110 are provided to the second portion 202 of the out-coupling diffractive means 108.

The second portion 202 of the out-coupling diffractive means 108 is positioned underneath the second in-coupling diffractive means 110 so that light in-coupled from the second in-coupling diffractive means 110 is provided to second portion 202 of the out-coupling diffractive means 108.

In this example the second portion 202 of the out-coupling diffractive means 108 is a trapezoid shape. The trapezoid is narrower at the end closest to the second in-coupling diffractive means 110. Other shapes can be used in other examples.

The second portion 202 of the out-coupling diffractive means 108 comprises grating lines which are parallel to the grating lines of the first portion 200 of the out-coupling diffractive means 108. The second portion 202 of the out-coupling diffractive means 108 comprises horizontal grating lines which expand the horizontally expanded beam in the vertical direction. The diffractive grating used in the second in-coupling diffractive means 110 can have the same period, orientation, and/or any other parameters, as the diffractive gratings used for the out-coupling diffractive means 108.

The second portion 202 of the out-coupling diffractive means 108 can provide, at least part of, the central region of the out-coupling diffractive means 108.

Figs. 2E and 2F show how the first in-coupling diffractive means 104, the first expanding diffractive means 106A, the second expanding diffractive means 106B and the respective portions 200, 202 of the out-coupling diffractive means 108 and the second in-coupling diffractive means 110 would be combined on the light guiding means 102.

The first layer 204 and the second layer 206 are arranged adjacent to each other. The first layer 204 and the second layer 206 are arranged so that the first in-coupling diffractive means 104 and the second in-coupling diffractive means 110 are adjacent to each other. The first layer 204 and second layer 206 are arranged so that the surfaces on which the respective diffractive means are provided are facing each other. In this case the diffractive means are provided on internal surfaces of the light guiding means 102. There can be a thin air gap between the first layer 204 and the second layer 206.

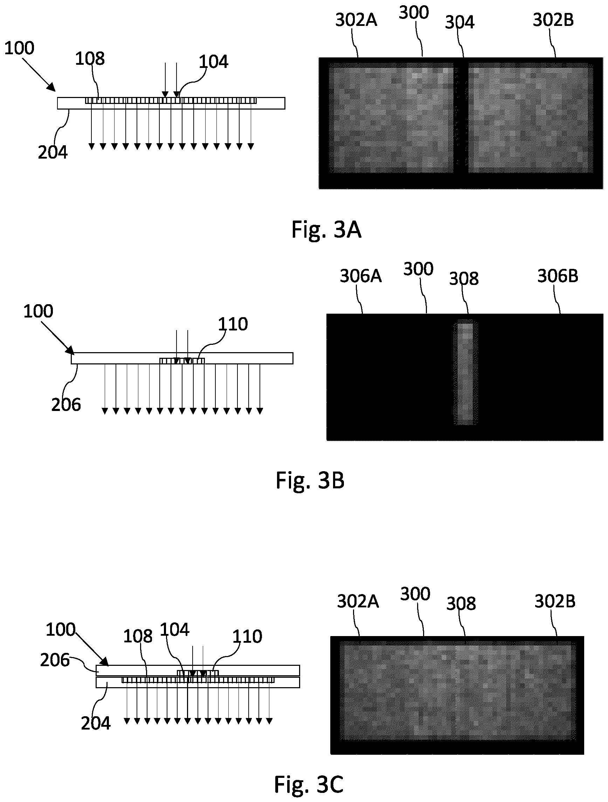

Figs. 3A to 3F show example outputs 300 that can be obtained with example apparatus 100. The example outputs can be obtained using an apparatus 100 as shown in Figs. 2A to 2F.

Fig. 3A shows the first layer 204 of the light guiding means 102 and the output 300 that can be obtained with this layer. The output 300 shows the 2-dimensional intensity that would be obtained from the out-coupled beam. The lighter the pixel the higher the intensity of the output.

The output 300 comprises a first bright region 302A and a second bright region 302B. The bright regions 302A, 302B can be provided by the edge regions of the out-coupling diffractive means 108.

The output 300 also comprises a dark band 304. The dark band 304 is between the bright regions 302A, 302B. The dark band 304 corresponds to the region of the out-coupling diffractive means 108 that is provided underneath the first in-coupling diffractive means 104.

The output 300 that is provided by the first layer 204 therefore has an uneven intensity.

Fig. 3B shows the second layer 206 of the light guiding means 102 and the output 300 that can be obtained with this layer. The output 300 obtained with the second layer 206 comprises a first dark region 306A and a second dark region 306B. The bright regions 306A, 306B are provided in corresponding regions to the bright regions 302A, 302B provided by the first layer 204.

The output 300 in Fig. 3B also comprises a bright band 308. The bright band 308 corresponds to the region of the out-coupling diffractive means 108 that is provided underneath the second in-coupling diffractive means 110. The position of the bright band 308 corresponds to the position of the dark band 304.

The output 300 that is provided by the second layer 206 therefore also has an uneven intensity.

Fig. 3C shows the apparatus 100 comprising the first layer 204 and the second layer 206 and the output 300 that can be obtained with this combination of layers. In this case the output 300 has a more uniform brightness. The bright band 308 provided by the second layer 206 is positioned in the gap between the bright regions 302A, 302B provided by the first layer 204. This therefore provides an improved output.

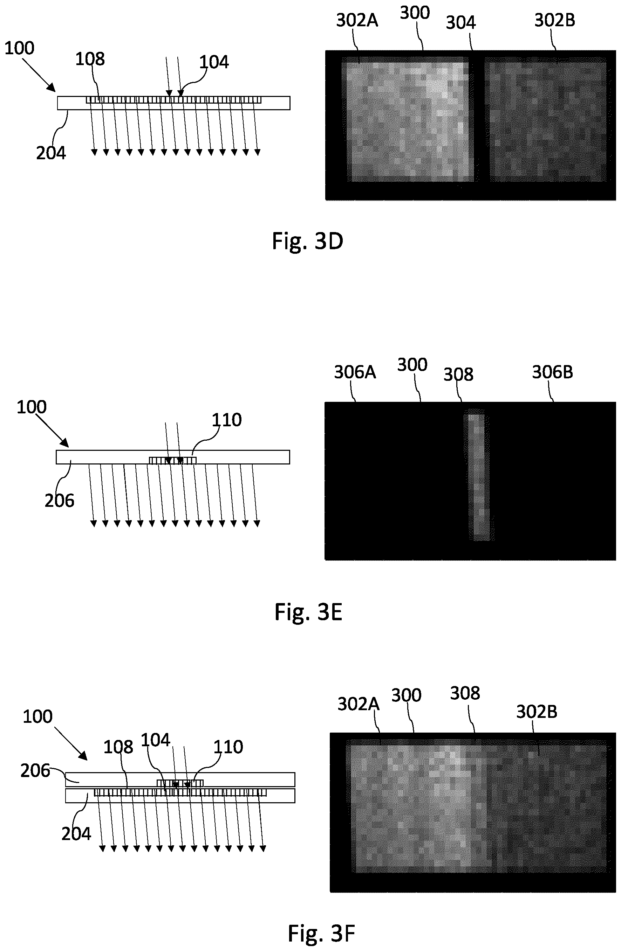

In the example of Figs. 3A to 3C the input beam of light is provided at 0°. In these examples the input beam of light is perpendicular to the surface of the respective layers 204, 206 of the light guiding means 102. The input beams of light can be provided at other angles in other examples. Figs. 3D to 3F show the example outputs that can be obtained using an apparatus 100 as shown in Figs. 2A to 2F with an input beam of light provided at -5°.

Fig. 3D shows the first layer 204 of the light guiding means 102 and the output 300 that can be obtained with this layer with an input beam of light provided at -5°. This output 300 has uneven intensity. The output 300 comprises a first bright region 302A and a second bright region 302B. The bright regions 302A, 302B can be provided by the edge regions of the out-coupling diffractive means 108. The bright region 302A on the right hand side is brighter than the bright region 302B on the left hand side due to the angle of the input beam of light.

The output 300 also comprises a dark band 304. The dark band 304 is between the bright regions 302A, 302B. The dark band 304 has an angle corresponding to the angle of the input beam of light.

Fig. 3E shows the second layer 206 of the light guiding means 102 and the output 300 that can be obtained with this layer with an input beam of light provided at -5°. This output 300 also has uneven intensity. In this output a bright band 308 is provided in the center of the output. The bright band 308 has an angle corresponding to the angle of the input beam of light.

Fig. 3F shows the apparatus 100 comprising the first layer 204 and the second layer 206 and the output 300 that can be obtained with this combination of layers with an input beam of light provided at -5°. In this case the output 300 has a more uniform brightness. The bright band 308 provided by the second layer 206 is positioned in the gap between the bright regions 302A, 302B provided by the first layer 204. This therefore provides an improved output even with the input beam of light being provided at an angle.

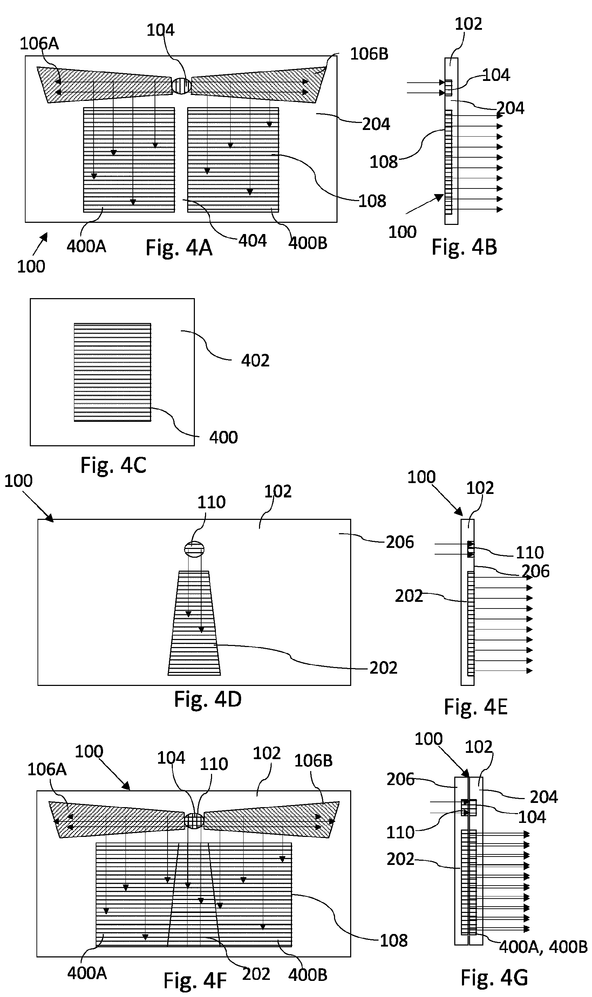

Figs. 4A to 4G show another example apparatus 100. The example apparatus 100 is similar to the apparatus 100 in previous Figs and corresponding reference numerals are used for corresponding features.

The apparatus in Figs. 4A to 4G comprises light guiding means 102. The light guiding means 102 in Figs. 4A to 4G is similar to the light guiding means 102 in Figs. 2A to 2F in that in Figs. 4A to 4G the light guiding means 102 comprises a first layer 204 and a second layer 206 with a portion 202 of the out-coupling diffractive means 108 provided on the second layer 206.

Figs. 4A and 4B show the first layer 204 of the light guiding means 102. The first in-coupling diffractive means 104, first expanding diffractive means 106A, second expanding diffractive means 106B can be arranged as shown in Figs. 2A and 2B.

The out-coupling diffractive means 108 comprises a first diffractive portion 400A and a second diffractive portion 400B. The first diffractive portion 400A is positioned underneath the first expanding diffractive means 106A so that light from the first expanding diffractive means 106A is provided to the first diffractive portion 400A. The second diffractive portion 400B is positioned underneath the second expanding diffractive means 106B so that light from the second expanding diffractive means 106B is provided to the second diffractive portion 400B.

The respective diffractive portions 400A, 400B can be the same size and shape. The respective diffractive portions 400A, 400B can be formed from the same master 402. A master 402 showing an example diffractive portion 400 is shown in Fig.4C.

In the example of Figs. 4A to 4G the respective diffractive portions 400A, 400B are rectangular. Other shapes can be used in other examples.

In the example of Figs. 4A to 4G a gap 404 is provided between the first diffractive portion 400A and the second diffractive portion 400B. The gap 404 is positioned underneath the first in-coupling diffractive means 104. There is no diffractive means in the gap 404 between the respective diffractive portions 400A, 400B.

Fig. 4C shows an example master 402 that can be used to fabricate the apparatus 100. The master 402 comprises a diffractive portion 400. The diffractive portion 400 can be used to fabricate the first diffractive portion 400A and the second diffractive portion 400B of the out-coupling diffractive means 108. The master 402 can for example be a nanoimprint lithography master, manufactured using an electron-beam lithography process, and used for replicating surface relief gratings. The use of the master 402 to form different parts of the out-coupling diffractive means 108 can enable larger out-coupling diffractive means 108 to be fabricated at lower cost.

Figs. 4D and 4E show the second layer 206 of the light guiding means 102. The second layer 206 of the light guiding means 102 comprises second in-coupling diffractive means 110 and another portion 202 of the out-coupling diffractive means 108. The second layer 206 of the light guiding means 102 can be as shown in Figs. 2C and 2D.

Figs. 4F and 4G show how the respective layers 204, 206 of the light guiding means 102 could be combined. The layers 204, 206 can be combined as shown in the examples of

Figs. 2E and 2F. The first layer 204 and the second layer 206 are arranged so that the first in-coupling diffractive means 104 and the second in-coupling diffractive means 110 are adjacent to each other.

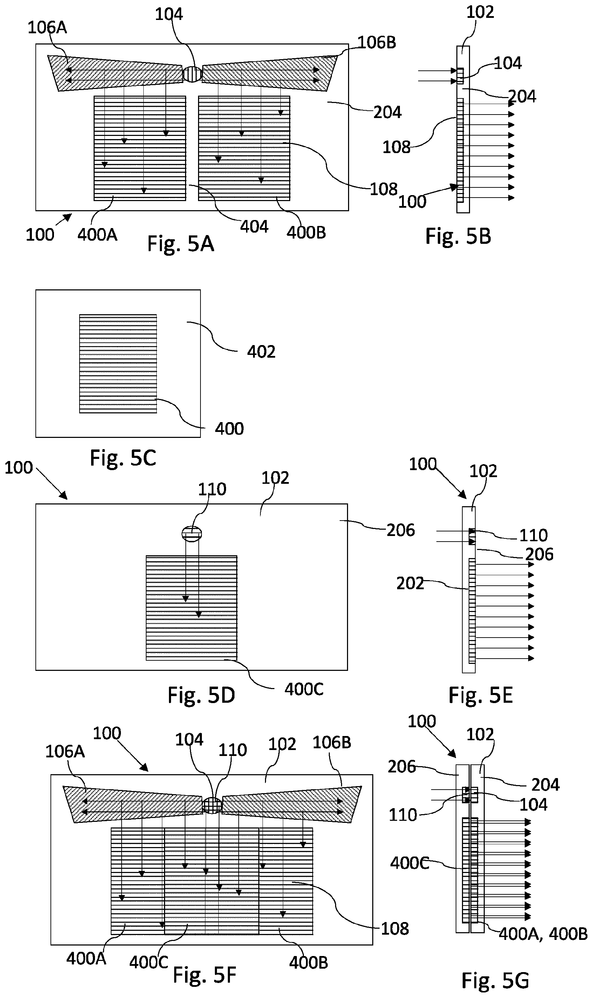

Figs. 5A to 5G show another example apparatus 100. The example apparatus 100 is similar to the apparatus 100 in previous Figs and corresponding reference numerals are used for corresponding features.

The apparatus in Figs. 5A to 5G comprises light guiding means 102. The light guiding means 102 in Figs. 5A to 5G is similar to the light guiding means 102 in Figs. 2A to 4G in that in Figs. 5A to 5G the light guiding means 102 comprises a first layer 204 and a second layer 206 with a third diffractive portion 400C of the out-coupling diffractive means 108 provided on the second layer 206.

Figs. 5A and 5B show the first layer 204 of the light guiding means 102. The first layer 204 of the light guiding means 102 comprises the first in-coupling diffractive means 104, the expanding diffractive means 106A, 106B and a first diffractive portion 400A and a second diffractive portion 400B of the out-coupling diffractive means 108. These can be arranged as shown in Figs. 4A and 4B.

Fig. 5C shows an example master 402 that can be used to fabricate the apparatus 100. The master 402 comprises a diffractive portion 400. In this example the diffractive portion 400 can be used to fabricate the first diffractive portion 400A and the second diffractive portion 400B of the out-coupling diffractive means 108 and also a third diffractive portion 400C provided on the second layer 206. Using the same master 402 to make multiple portions of the out-coupling diffractive means 108 can enable the apparatus 100 to be fabricated at lower cost.

Figs. 5D and 5E show the second layer 206 of the light guiding means 102. The second layer 206 of the light guiding means 102 comprises second in-coupling diffractive means 110 and a third diffractive portion 400C of the out-coupling diffractive means 108.

The third diffractive portion 400C of the out-coupling diffractive means 108 is positioned underneath the second in-coupling diffractive means 110 so that light in-coupled from the second in-coupling diffractive means 110 is provided to third diffractive portion 400C of the out-coupling diffractive means 108. The third diffractive portion 400C of the out-coupling diffractive means 108 can provide, at least part of, the central region of the out-coupling diffractive means 108.

In this example the third diffractive portion 400C is the same size and shape as the first diffractive portion 400A and the second portion 400B. The respective diffractive portions 400A, 400B, 400C can be formed from the same master. In this example the respective diffractive portions 400A, 400B, 400C are rectangular. Other shapes could be used in other examples.

Figs. 5F and 5G show how the respective layers 204, 206 of the light guiding means 102 could be combined. The layers 204, 206 can be combined as shown in the examples of Figs. 2E and 2F. The first layer 204 and the second layer 206 are arranged so that the first in-coupling diffractive means 104 and the second in-coupling diffractive means 110 are adjacent to each other.

When the respective layers 204, 206 are positioned adjacent to each other there is some overlap between the third diffractive portion 400C and the first and second diffractive portions 400A, 400B. That is, the gap 404 between the first and second diffractive portions 400A, 400B is smaller than the width of the third diffractive portion 400C so that some of the third diffractive portion 400C overlays a section of the first diffractive portion 400A and some of the third diffractive portion 400C overlays a section of the second diffractive portion 400B.

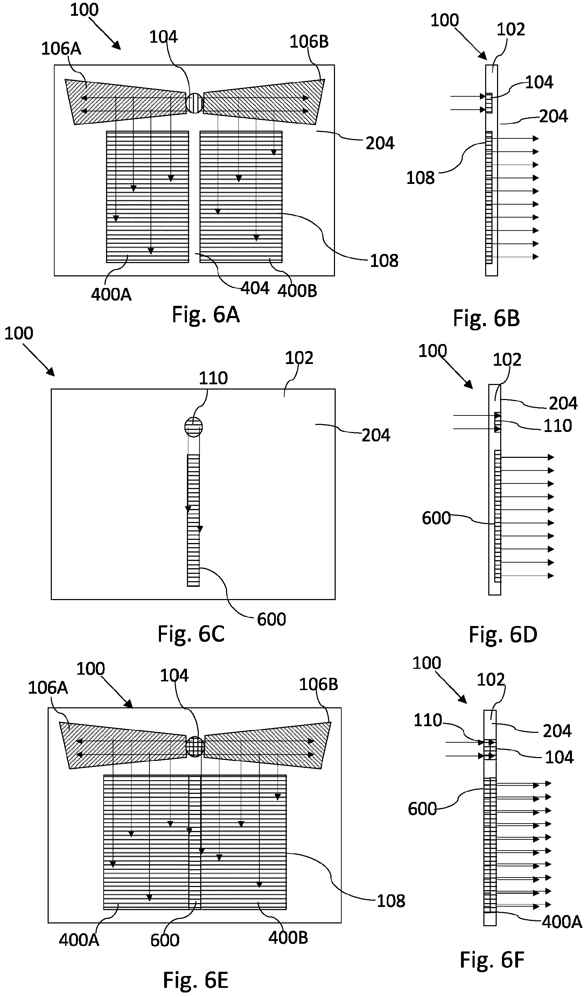

Figs. 6A to 6F show another example apparatus 100. The example apparatus 100 is similar to the apparatus 100 in previous Figs and corresponding reference numerals are used for corresponding features.

The apparatus in Figs. 6A to 6F comprises light guiding means 102. The light guiding means 102 in Figs. 6A to 6F comprises only a first layer 204.

Figs. 6A and 6B show a first surface of the first layer 204 of the light guiding means 102. The first surface comprises the first in-coupling diffractive means 104, the expanding diffractive means 106A, 106B and a first diffractive portion 400A and a second diffractive portion 400B of the out-coupling diffractive means 108. These can be arranged as shown in Figs. 4A and 4B.

Figs. 6C and 6D show the second surface of the first layer 204 of the light guiding means 102. The second surface comprises second in-coupling diffractive means 110 and a further portion 600 of the out-coupling diffractive means 108.

The further portion 600 of the out-coupling diffractive means 108 is positioned underneath the second in-coupling diffractive means 110 so that light in-coupled from the second in-coupling diffractive means 110 is provided to further diffractive portion 600 of the out-coupling diffractive means 108. The further diffractive portion 600 of the out-coupling diffractive means 108 can provide, at least part of, the central region of the out-coupling diffractive means 108.

In this example the further diffractive portion 600 is sized and shaped to fit in the gap 404 between the first diffractive portion 400A and the second diffractive portion 400B. in this example the further diffractive portion 600 is rectangular. Other shapes could be used in other examples.

Figs. 6E and 6F show how the diffractive means on the respective surfaces are positioned relative to each other. The respective diffractive means are arranged so that the first in-coupling diffractive means 104 is aligned with the second in-coupling diffractive means 110 and the further diffractive portion 600 is aligned with the gap 404 between the first diffractive portion 400A and the second diffractive portion 400B. In this case there is no overlap between the further diffractive portion 600 and the first diffractive portion 400A and the second diffractive portion 400B.

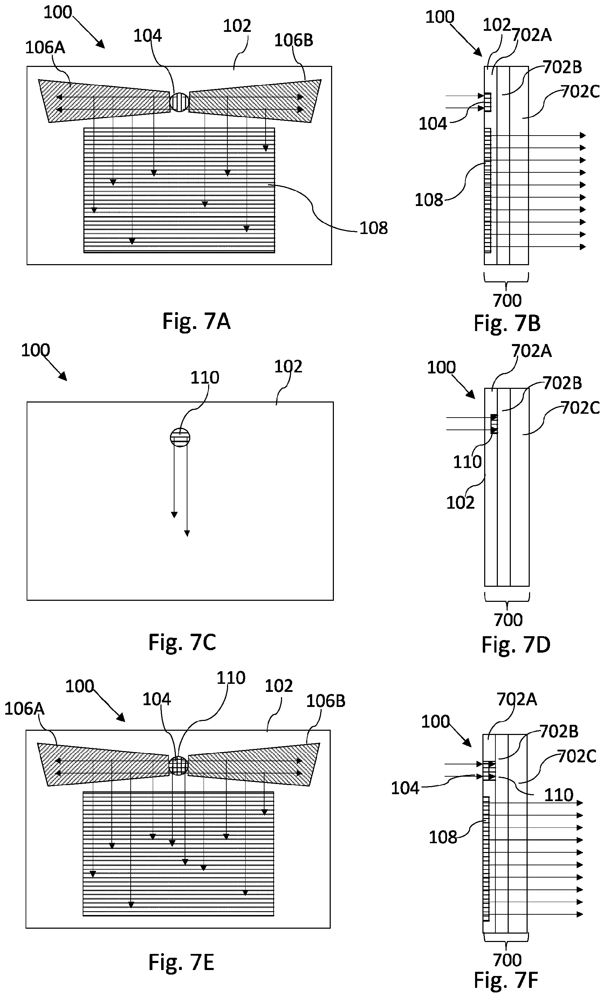

Figs. 7A to 7G show another example apparatus 100. The example apparatus 100 is similar to the apparatus 100 in previous Figs and corresponding reference numerals are used for corresponding features.

The apparatus in Figs. 7A to 7G comprises light guiding means 102. The light guiding means 102 in Figs. 7A to 7G differs from the light guiding means 102 in previous examples in that in Figs. 7A to 7G the light guiding means 102 comprises a stack 700 of layers 702 arranged to provide better uniformity for different wavelengths of input light. In this example the stack 700 comprises three layers 702A, 702B, 702C. The stack 700 can comprise other numbers of layers 702 in other examples.

The apparatus 100 in Figs. 7A to 7G comprises first in-coupling diffractive means 104, first expanding diffractive means 106A, second expanding diffractive means 106B, second in-coupling diffractive means 110 and out-coupling diffractive means 108 provided on a surface of a first layer 702A. These are shown in Figs. 7A and 7B. In this example first in-coupling diffractive means 104, first expanding diffractive means 106A, second expanding diffractive means 106B, second in-coupling diffractive means 110 and out-coupling diffractive means 108 are arranged as shown in Fig. 1A. Other arrangements can be used in other examples.

The example apparatus 100 of Figs. 7A to 7G also comprises a second in-coupling diffractive means 110. These are shown in Figs. 7C and 7D The second in-coupling diffractive means 110 is provided on a second surface of the first layer 702A of the stack 700. In this example, the first in-coupling diffractive means 104 and the second in-coupling diffractive means 110 are provided on opposing surfaces of the same layer 702A.

In this example only the second in-coupling diffractive means 110 is provided on the second surface of the first layer 702A. The second in-coupling diffractive means 110 can be arranged as shown in Fig. 1C. There are no other diffractive means on the second surface of the first layer 702A. Other arrangements can be used in other examples.

Figs. 7E and 7F show all of the respective diffractive means.

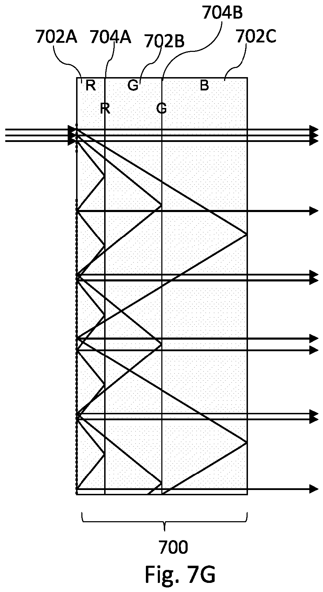

Fig. 7G shows an example stack 700 in more detail. The stack comprises a first layer 702A, a second layer 702B, and a third layer 702C. Other numbers of layers 702 could be used in other examples.

The stack 700 also comprises interfaces 704 between the respective layers 702. The stack 700 comprises a first interface 704A between the first layer 702A and the second layer 702B. The first interface 704A is configured to reflect light having a first wavelength and reflection angle and allow light having a second and third wavelength and reflection angle to pass through. In the example of Fig. 7G the first interface 704A would reflect red light but allow blue and green light to pass through. The stack 700 also comprises a second interface 704B between the second layer 702B and the third layer 702C wherein the second interface 704B is configured to reflect light having a second wavelength and reflection angle and allow light having the third wavelength and reflection angle to pass through. In the example of Fig. 7G the second interface 704B would reflect green light but allow blue light to pass through.

The interfaces 704 can act as bonding layers or optical adhesives between the layers 702 in a bonding or in a lamination process.

The refractive indices of the layers 702 and/or interfaces 704 can decrease through the stack 700. The refractive indices can decrease gradually through the stack. The decrements of the refractive indices can be determined by factors such as the number of layers 702 and interfaces 704 in the stack 700 or any other suitable factor. For example, a stack 700 comprising more layers 702 than shown in Fig. 7G could have smaller decrements in the refractive indices.

In some examples the layers 702 can be made of the same material. In such examples the layers 702 would have the same refractive index. In some examples the layers 702 can be made of different materials. In such examples the layers 702 could have different refractive indices. In some examples there could be one or more layers 702 that have the same material and the same refractive index and one or more layers 702 that have different materials and different refractive indices.

The use of different material for different layers 702 can also enable different optical properties to be provided. The different optical properties could be absorption and scattering properties and/or any other properties. For example, the last layer 702C in the stack could be selected to have low absorption of blue light. This can increase the brightness levels of the output.

In some examples a thin film material is provided at the interfaces 704. The thin film material can be different for different interfaces 704. This can enable the different refractive indices to be obtained.

In some examples the relative thicknesses of the respective layers 702 in the stack 700 can be arranged so that light having the second wavelength undergoes fewer internal reflections than the light having the first wavelength as the light is guided from the first in-coupling diffractive means 104 or the second in-coupling diffractive means 110 towards the one or more out-coupling diffractive means 108. In the examples of Figs. 7A to 7D the thickness of the layers 702 increases through the stack 700 so that the first layer 702A is thinner than the second layer 702B and the third layer 702C.

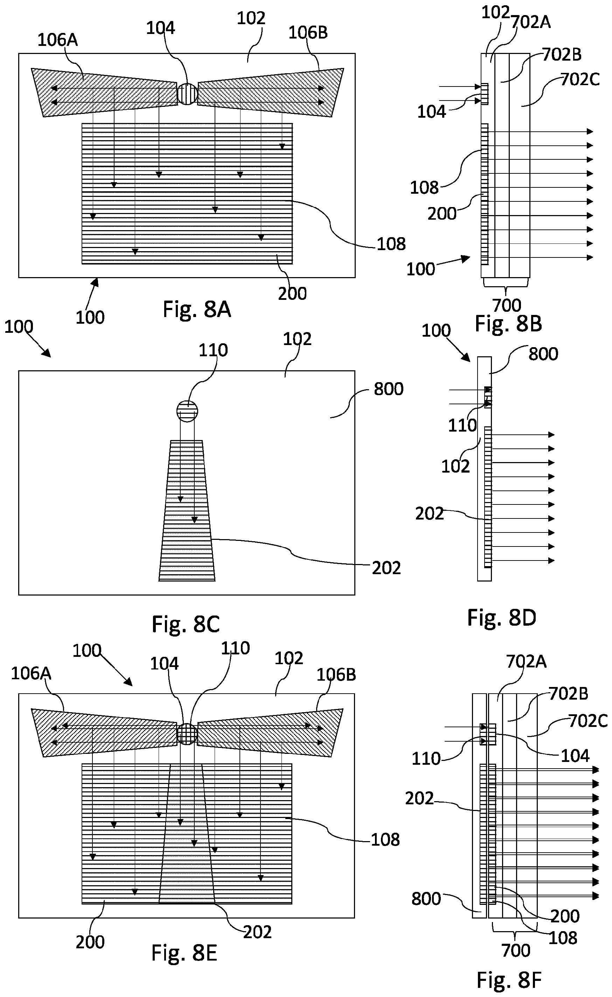

Figs. 8A to 8F show another example apparatus 100. The example apparatus 100 is similar to the apparatus 100 in previous Figs and corresponding reference numerals are used for corresponding features.

The apparatus 100 in Figs. 8A to 8F is similar to the apparatus 100 of Figs. 7A to 7G in that the light guiding means 102 comprises a stack 700 of layers 702 arranged to provide better uniformity for different wavelengths of input light.

Figs. 8A and 8B show the first in-coupling diffractive means 104, first expanding diffractive means 106A, second expanding diffractive means 106B, second in-coupling diffractive means 110 and a first portion 200 of the out-coupling diffractive means 108. These are provided on a first layer 702A of the stack 700. These can be arranged as shown in Figs. 7A and 7B.

Figs. 8C and 8D show the second in-coupling diffractive means 110 and a second portion 202 of the out-coupling diffractive means 108. The second portion 202 of the out-coupling diffractive means 108 is arranged as a trapezoid underneath the second in-coupling diffractive means 110. This can be as shown in Fig. 2C.

In this example the second in-coupling diffractive means 110 and a second portion 202 of the out-coupling diffractive means 108 are provided in an additional layer 800. The additional layer 800 is not part of the stack 700.

Figs. 8E and 8F show how the additional layer 800 and the stack 700 can be combined to provide the apparatus 100. The additional layer 800 and the stack 700 are arranged adjacent to each other. The additional layer 800 and the stack 700 are arranged so that the first in-coupling diffractive means 104 and the second in-coupling diffractive means 110 are adjacent to each other. The additional layer 800 and stack 700 are arranged so that the surfaces on which the respective diffractive means are provided are facing each other. In this case, once the additional layer 800 and the stack 700 are combined, the diffractive means are provided on internal surfaces of the light guiding means 102.

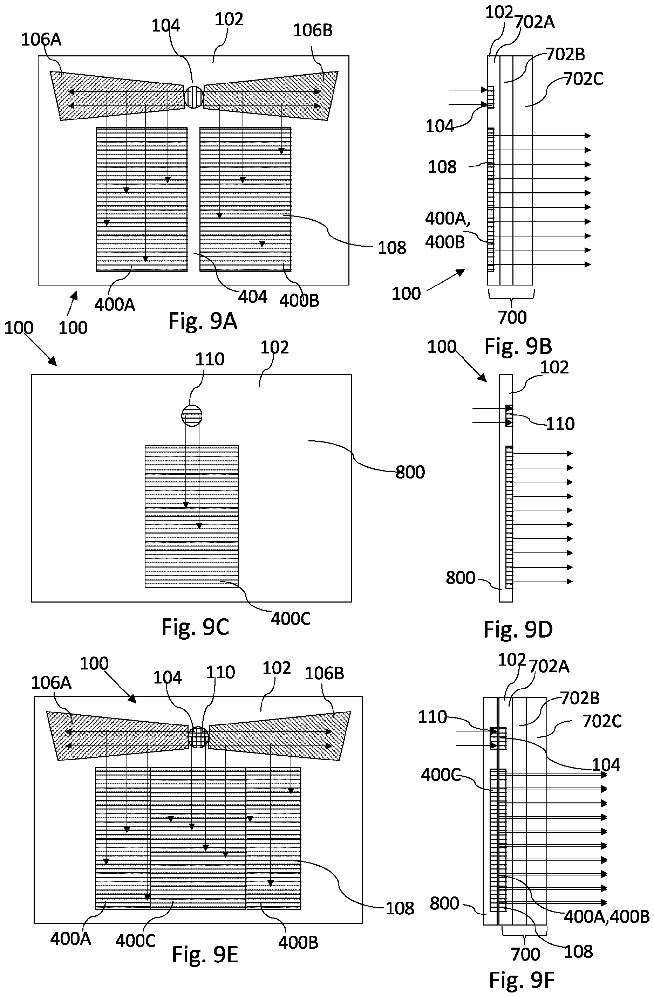

Figs. 9A to 9F show another example apparatus 100. The example apparatus 100 is similar to the apparatus 100 in previous Figs and corresponding reference numerals are used for corresponding features.

The apparatus 100 in Figs. 9A to 9F is similar to the apparatus 100 of Figs. 8A to 8F in that the light guiding means 102 comprises a stack 700 of layers 702 arranged to provide better uniformity for different wavelengths of input light and the second in-coupling diffractive means 110 and the part of the out-coupling diffractive means 108 are provided on an additional layer 800.

The example apparatus 100 of Figs. 9A to 9F differs from the apparatus 100 of Figs. 8A to 8F in that the out-coupling diffractive means 108 has a different arrangement.

In the example apparatus 100 of Figs. 9A to 9F the out-coupling diffractive means 108 has a similar arrangement to that shown in Figs. 5A to 5G. The out-coupling diffractive means 108 comprises a first diffractive portion 400A and a second diffractive portion 400B that are provided on the first layer 702A of the stack, and a third diffractive portion 400C that is provided on an additional layer 800 of the light guiding means 102.

The first diffractive portion 400A and the second diffractive portion 400B are rectangular portions that are arranged beneath the respective expanding diffractive means 106A, 106B. A gap 404 is provided between the first diffractive portion 400A and the second diffractive portion 400B. The third diffractive portion 400C of the out-coupling diffractive means 108 is positioned underneath the second in-coupling diffractive means 110 so that light in-coupled from the second in-coupling diffractive means 110 is provided to third diffractive portion 400C of the out-coupling diffractive means 108.

The respective diffractive portions 400A, 400B, 400C can be formed from the same master. The respective diffractive portions 400A, 400B, 400C can have the same size and shape. Other arrangements for the out-coupling diffractive means could be used in other examples.

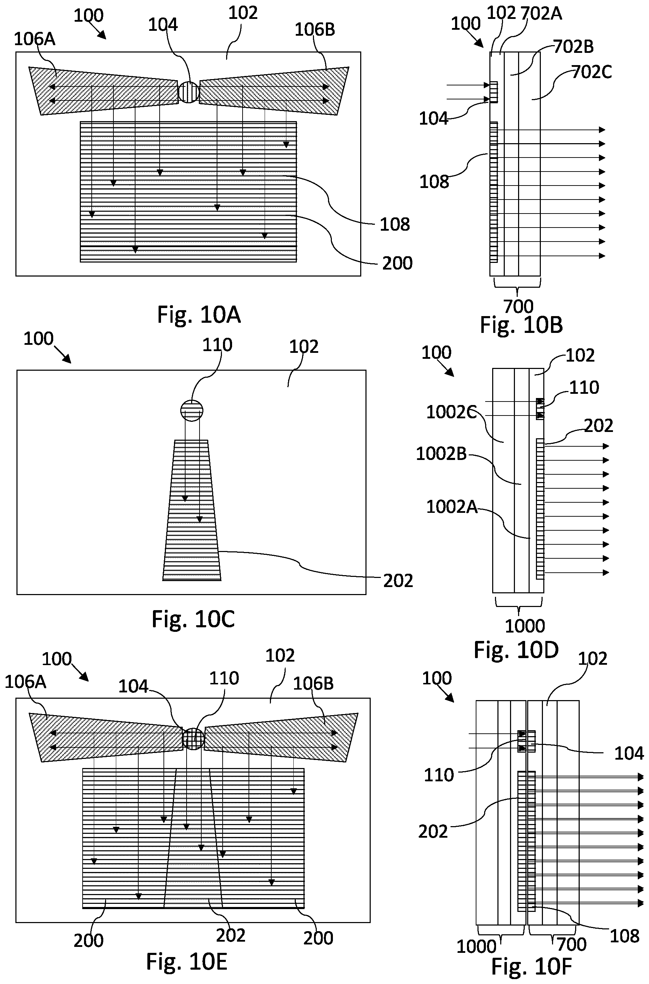

Figs. 10A to 10F show another example apparatus 100. The example apparatus 100 is similar to the apparatus 100 in previous Figs and corresponding reference numerals are used for corresponding features.

In the example of Figs.10A to 10F the first in-coupling diffractive means 104, first expanding diffractive means 106A, second expanding diffractive means 106B, second in-coupling diffractive means 110 and a first portion 200 of the out-coupling diffractive means 108 are provided on a first layer 702A of a stack 700. This is shown in Figs. 10A and 10B.

Figs. 10C and 10D show the second in-coupling diffractive means 110 and a second portion 202 of the out-coupling diffractive means 108. The second portion 202 of the out-coupling diffractive means 108 is arranged as a trapezoid underneath the second in-coupling diffractive means 110. This can be as shown in Fig. 2C.

In this example the second in-coupling diffractive means 110 and a second portion 202 of the out-coupling diffractive means 108 are provided in an additional stack 1000. The additional stack 1000 comprises three layers 1002A, 1002B, 1002C. The additional stack 1000 can also be arranged to provide better uniformity for different wavelengths of input light. The arrangement of the layers 1002 within the additional stack 1000 can be the same as the stack 700 or can be different.

Figs. 10E and 10F show how the additional stack 1000 and the stack 700 can be combined to provide the apparatus 100. The additional stack 1000 and the stack 700 are arranged adjacent to each other. The additional stack 1000 and the stack 700 are arranged so that the first in-coupling diffractive means 104 and the second in-coupling diffractive means 110 are adjacent to each other. The additional stack 1000 and stack 700 are arranged so that the surfaces on which the respective diffractive means are provided are facing each other. In this case, once the additional stack 1000 and the stack 700 are combined, the diffractive means are provided on internal surfaces of the light guiding means 102.

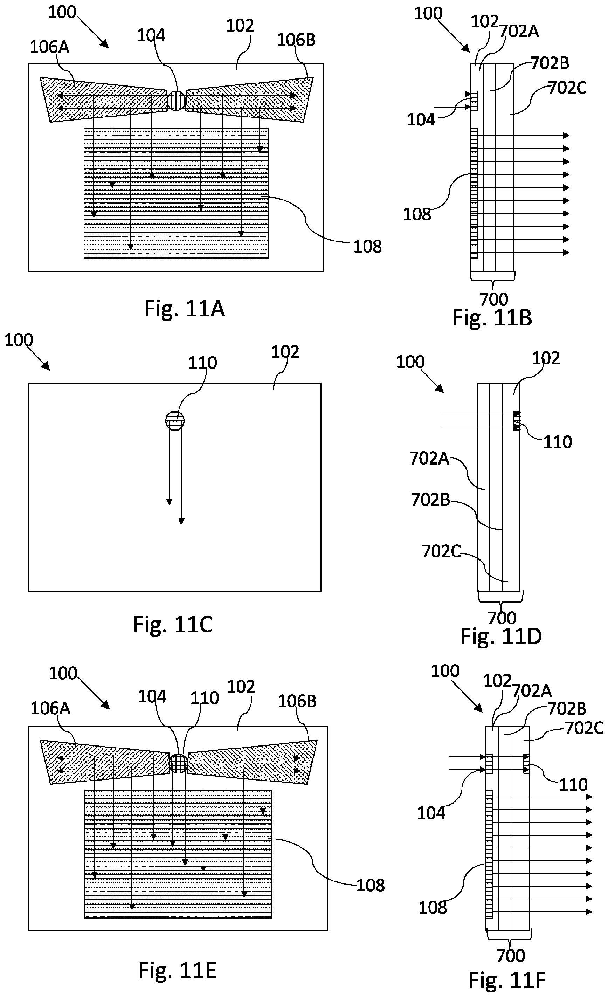

Figs. 11A to 11F show another example apparatus 100. The example apparatus 100 is similar to the apparatus 100 in previous Figs and corresponding reference numerals are used for corresponding features.

In the example of Figs.11A to 11F the first in-coupling diffractive means 104, first expanding diffractive means 106A, second expanding diffractive means 106B, second in-coupling diffractive means 110 and a first portion 200 of the out-coupling diffractive means 108 are provided on a first layer 702A of a stack 700. An example layout for these diffractive means is shown in Fig. 11A and the position of the first layer 702A in the stack 700 is shown in Fig. 11B.

Figs. 11C and 11D show the second in-coupling diffractive means 110. In this example the second in-coupling diffractive means 110 is provided on a surface of the third layer 702C of the stack 700. In this example, the first in-coupling diffractive means 104 and the second in-coupling diffractive means 110 are provided on opposing outer surfaces of the stack 700.

Figs. 11E and 11F show all of the respective diffractive means on the stack. Having the first in-coupling diffractive means 104 and the second in-coupling diffractive means 110 on different layers 702 within the stack 700 increases the separation between the first in-coupling diffractive means 104 and the second in-coupling diffractive means 110.

In the example of Figs.11A to 11F the interfaces 704 may also at least partially pass through all wavelengths and reflection angles so that the light beams with larger wavelengths and larger reflection angles incoupled with the second in-coupling diffractive means 110 can at least partially reach the out-coupling diffractive means 108.

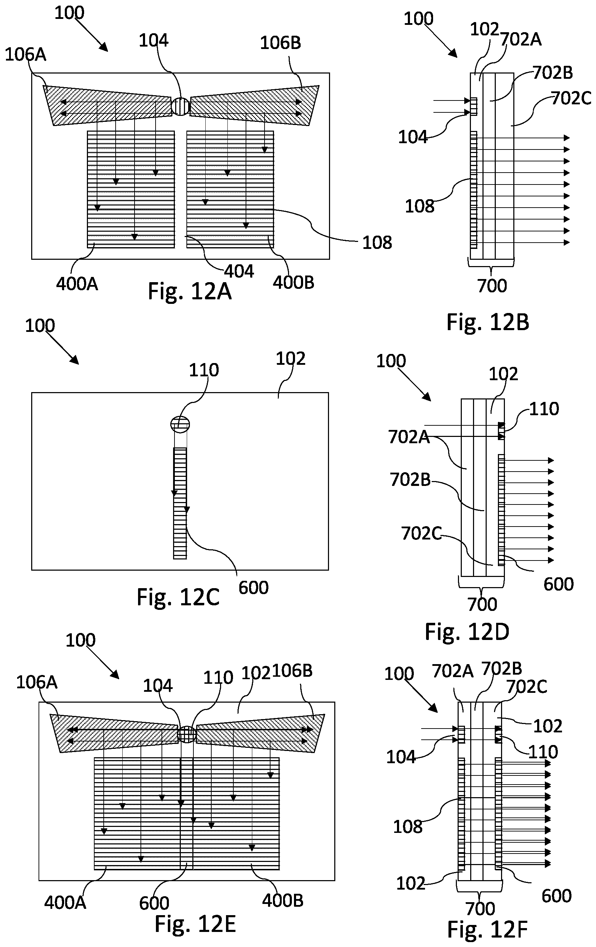

Figs. 12A to 12F show another example apparatus 100. The example apparatus 100 is similar to the apparatus 100 in previous Figs and corresponding reference numerals are used for corresponding features.

In the example of Figs.12A to 12F the first in-coupling diffractive means 104, first expanding diffractive means 106A, second expanding diffractive means 106B, second in-coupling diffractive means 110 and a first diffractive portion 400A and a second diffractive portion 400B of the out-coupling diffractive means 108 are provided on a first layer 702A of a stack 700. An example layout for these diffractive means is shown in Fig. 12A and the position of the first layer 702A in the stack 700 is shown in Fig. 12B.

The first diffractive portion 400A and the second diffractive portion 400B are rectangular portions that are arranged beneath the respective expanding diffractive means 106A, 106B. A gap 404 is provided between the first diffractive portion 400A and the second diffractive portion 400B. The gap 404 is positioned underneath the first in-coupling diffractive means 104.

Figs. 12C and 12D show the second in-coupling diffractive means 110. In this example the second in-coupling diffractive means 110 is provided on a surface of the third layer 702C of the stack 700. In this example, the first in-coupling diffractive means 104 and the second in-coupling diffractive means 110 are provided on opposing outer surfaces of the stack 700.

A further portion 600 of the out-coupling diffractive means 108 is also provided on the surface of the third layer 702C of the stack 700. The further portion 600 of the out-coupling diffractive means 108 is provided on the same surface as the second in-coupling diffractive means 110.

In this example the further diffractive portion 600 is sized and shaped to fit in the gap 404 between the first diffractive portion 400A and the second diffractive portion 400B. in this example the further diffractive portion 600 is rectangular. Other shapes could be used in other examples. There is no overlap between the further diffractive portion 600 and the first diffractive portion 400A and the second diffractive portion 400B.

Figs. 12E and 12F show all of the respective diffractive means on the stack. Having the first in-coupling diffractive means 104 and the second in-coupling diffractive means 110 on different layers 702 within the stack 700 increases the separation between the first in-coupling diffractive means 104 and the second in-coupling diffractive means 110.

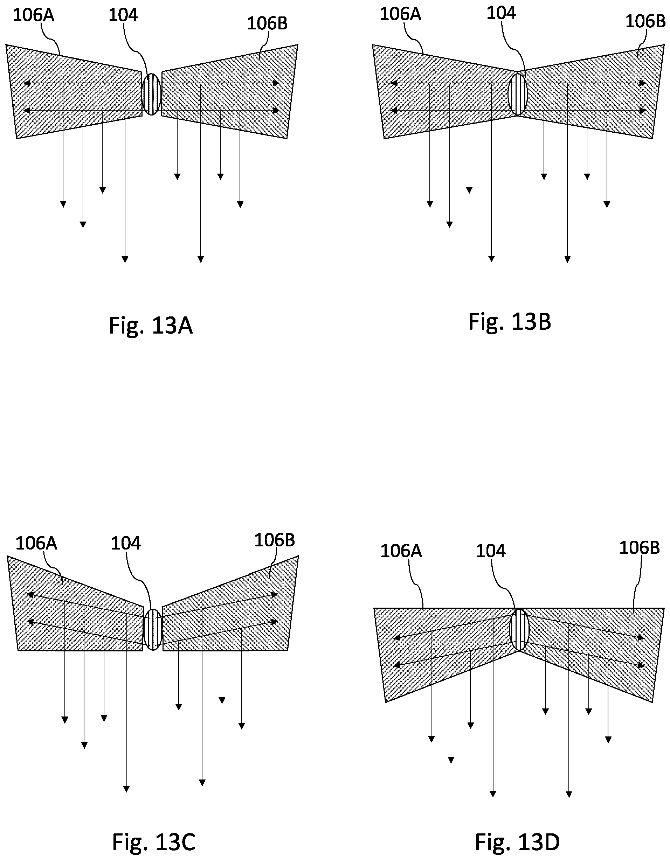

Figs. 13A to 13D show different example arrangements for the diffractive expanding means 106A, 106B. These arrangements could be used in any of the example apparatus 100.

In each of the examples of Figs. 13A to 13D the first in-coupling diffractive means 104 is located in a central position. The first in-coupling diffractive means 104 has a vertical diffractive grating and a circular shape. Other arrangements for the first in-coupling diffractive means 104 could be used in other examples.

Two expanding means 106 are provided in each of the arrangements. A first expanding means 106A is provided on a left hand side of the first in-coupling diffractive means 104 and a second expanding means 106B is provided on a right hand side of the first in-coupling diffractive means 104.

The expanding means 106 are positioned relative to the first in-coupling diffractive means 104 so that some of the input beam of light is provided from the first in-coupling diffractive means 104 to the first expanding diffractive means 106A and some of the input beam of light is provided from the first in-coupling diffractive means 104 to the second expanding diffractive means 106B. In the examples of Figs. 13A to 13D equal parts, or substantially equal parts, of the input beams are provided to the respective expanding diffractive means 106A, 106B.

The expanding diffractive means 106A, 106B are symmetrical to each other. The shape of the first expanding diffractive means 106A is the same as the shape of the second expanding diffractive means 106B but with different orientations.

The gratings of the expanding diffractive means 106A, 106B are at a different angle to the grating of the first in-coupling diffractive means 104. The gratings of the expanding diffractive means 106A, 106B are provided at an oblique angle to the gratings of the first in-coupling diffractive means 104. The grating line angles and the grating periods of the expanding diffractive means 106A, 106B are defined by the grating line angles and the grating periods of the first in-coupling diffractive means 104 and the out-coupling diffractive means 108. In the example of Figs. 13A to 13D the gratings of the expanding diffractive means 106A, 106B are provided at a 45° to the gratings of the first in-coupling diffractive means 104.

The expanding diffractive means 106A, 106B have elongate shapes. The elongate shapes are longer than they are wide. The expanding diffractive means 106A, 106B have a narrow end and a wider end. The narrow end is closer to the first in-coupling diffractive means 104.

In Fig. 13A the expanding diffractive means 106A, 106B are irregular quadrilaterals. There are small gaps between the edges of the expanding diffractive means 106A, 106B and the edges of the first in-coupling diffractive means 104.

In Fig. 13B the expanding diffractive means 106A, 106B are a similar shape to the expanding diffractive means 106A, 106B however the edges of the expanding diffractive means 106A, 106B continue to the edges of the first in-coupling diffractive means 104 so that there is no gap.

In Fig. 13C the expanding diffractive means 106A, 106B are also irregular quadrilaterals. The expanding diffractive means 106A, 106B are a different shape to those shown in Figs. 13A and 13B. In this example the lower edge of the expanding diffractive means 106A, 106B is perpendicular to the grating of the first in-coupling diffractive means 104. There are small gaps between the edges of the expanding diffractive means 106A, 106B and the edges of the first in-coupling diffractive means 104.

In Fig. 13D the expanding diffractive means 106A, 106B are also irregular quadrilaterals. The expanding diffractive means 106A, 106B are a different shape to those shown in Figs. 13A to 13C. In this example the upper edge of the expanding diffractive means 106A, 106B is perpendicular to the grating of the first in-coupling diffractive means 104. The edges of the expanding diffractive means 106A, 106B continue to the edges of the first in-coupling diffractive means 104 so that there is no gap.

The examples of Figs. 13A to 13D show a few examples of the arrangements that could be used. Other arrangements or variations of these arrangements could also be used in examples of the disclosure.

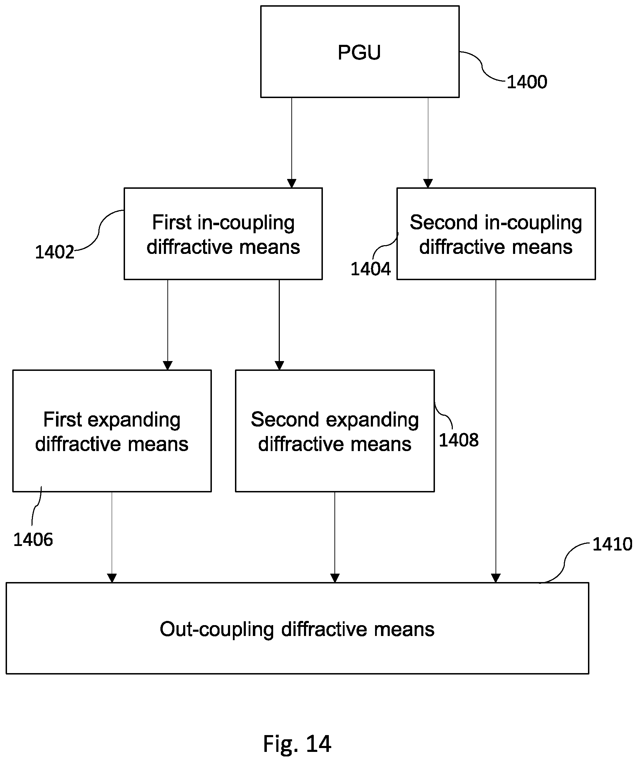

Fig. 14 shows an example optical path for an input beam of light in examples of the disclosure. The example optical path shown in Fig. 14 can apply to examples where the out-coupling diffractive means 108 is provided on the same surface as the first in-coupling diffractive means 104 and there is no portion of the out-coupling diffractive means 108 on the same surface as the second in-coupling diffractive means 104 such as the example of Figs 1A to 1F.

At block 1400 the light is emitted from a picture generating unit or any other suitable light source.

At block 1402 some light is incoupled by the first in-coupling diffractive means 104. This light is incoupled in directions -1 and +1. These directions are indicated by the labelled arrows on Fig. 1A. In this case the -1 direction would be towards the left hand side and the +1 direction would be towards the right hand side.

At block 1404 some light is incoupled by the second in-coupling diffractive means 110. This light is incoupled in direction 2. This direction is indicated by the labelled arrow on Fig. 1C.

In this case the 2 direction is downwards. The 2 direction is perpendicular to the -1/+1 directions.

At block 1406 some of the light that has been incoupled by the first in-coupling diffractive means 104 is provided to the first expanding diffractive means 106A. This light is expanded in direction -1 and deflected in direction 2. Similarly, at block 1408 some of the light that has been incoupled by the first in-coupling diffractive means 104 is provided to the second expanding diffractive means 106B. This light is expanded in direction +1 and deflected in direction 2.

At block 1410 the light that has been incoupled by the second in-coupling diffractive means 110 and the light that has been expanded by the respective expanding diffractive means 106A, 106B is provided to the out-coupling diffractive means 108. The out-coupling diffractive means 108 expands the light in direction 2 and out-couples the light.

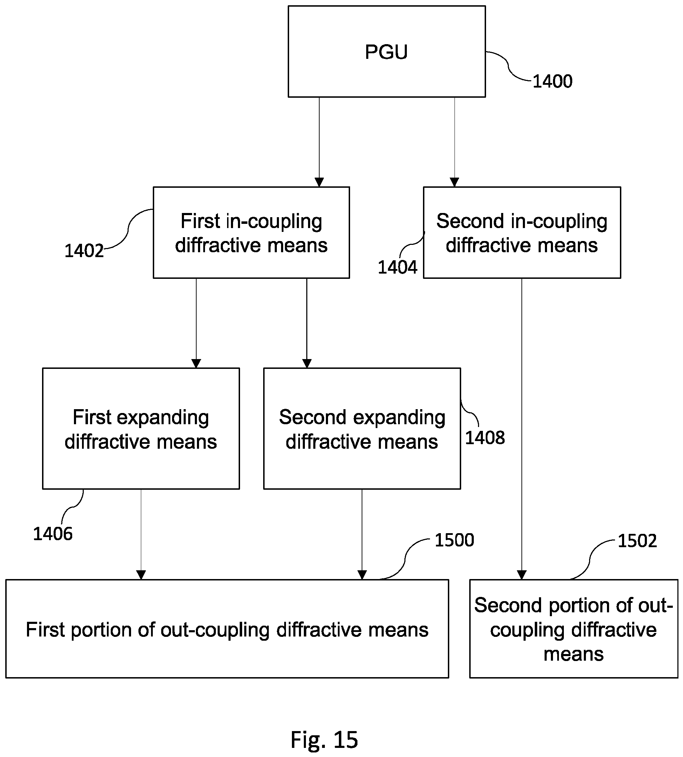

Fig. 15 shows another example optical path for an input beam of light in examples of the disclosure. The example optical path shown in Fig. 14 can apply to examples where the out-coupling diffractive means 108 comprises a first portion 200 and a second portion 202 as the example of Figs 2A to 2F. In this case the first portion of the out-coupling diffractive means 108 is provided on the same surface as the first in-coupling diffractive means 104 and the second portion 202 of the out-coupling diffractive means 108 is provided on the same surface as the second in-coupling diffractive means 110.

The optical path in Fig. 15 is initially the same as the method of Fig. 14 for block 1400 to 1408. The optical path is different where the light is provided to the out-coupling diffractive means.

At block 1500 the light that has been expanded by the respective expanding diffractive means 106A, 106B is provided to the first portion 200 of the out-coupling diffractive means 108. The first portion 200 of the out-coupling diffractive means 108 expands the light in direction 2 and out-couples the light.

At block 1502 the light that has been incoupled by the second in-coupling diffractive means 110 is provided to the second portion 202 of the out-coupling diffractive means 108. The second portion 202 out-coupling diffractive means 108 expands the light in direction 2 and out-couples the light.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using `consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: "and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of `at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising:
a light guiding means wherein the light guiding means comprises at least;
first in-coupling diffractive means configured to in-couple one or more input beams of light into the light guiding means,
first expanding diffractive means and second expanding diffractive means configured to expand the one or more input beams of light wherein the first expanding diffractive means is provided on a first side of the first in-coupling diffractive means and the second expanding diffractive means is provided on a second side of the first in-coupling diffractive means,
second in-coupling diffractive means configured to in-couple one or more input beams of light into the light guiding means, and
one or more out-coupling diffractive means configured to out-couple light from the first expanding diffractive means, the second expanding diffractive means and the second in-coupling diffractive means.

2. An apparatus as claimed in claim 1 wherein the one or more out-coupling diffractive means comprise a central region and two edge regions and light from the first expanding diffractive means is incident on a first edge region, light from the second expanding diffractive means is incident on a second edge region, and light from the second in-coupling diffractive means is incident on the central region.

3. An apparatus as claimed in any preceding claim wherein a diffractive grating of the second in-coupling diffractive means is provided at a perpendicular orientation to the diffractive grating of the first in-coupling diffractive means.

4. An apparatus as claimed in any preceding claim wherein the second in-coupling diffractive means is aligned with the first in-coupling diffractive means.

5. An apparatus as claimed in any preceding claim wherein the second expanding diffractive means is symmetrical to the first expanding diffractive means.

6. An apparatus as claimed in any preceding claim wherein the light guiding means comprises at least one layer and the first in-coupling diffractive means is provided on a first surface of the at least one layer and the second in-coupling diffractive means is provided on a second surface of the at least one layer.

7. An apparatus as claimed in any of claims 1 to 5 wherein the light guiding means comprises at least a first layer and a second layer wherein the first in-coupling diffractive means is provided on a surface of the first layer and the second in-coupling diffractive means is provided on a surface of the second layer.

8. An apparatus as claimed in claim 7 wherein the first and second layers are arranged so that the first in-coupling diffractive means and the second in-coupling diffractive means are adjacent to each other.

9. An apparatus as claimed in any of claims 7 to 8 wherein the first expanding diffractive means, the second expanding diffractive means and the out-coupling diffractive means are provided on the first layer of the light guiding means.

10. An apparatus as claimed in any of claims 7 to 8 wherein the first expanding diffractive means, the second expanding diffractive means and edge regions of the one or more out-coupling diffractive means are provided on the first layer of the light guiding means and a central region of the one or more out-coupling diffractive means is provided on the second layer of the light guiding means.

11. An apparatus as claimed in any preceding claim wherein the light guiding means comprises a stack of layers wherein respective layers within the stack are arranged to enable beams of light comprising at least light having a first wavelength and light having a second wavelength to be guided through the light guiding means via internal reflections wherein the second wavelength is shorter than the first wavelength, and
the stack also comprises an interface between layers wherein the interface is configured to reflect light having the first wavelength and allow light having the second wavelength to pass through; and,
wherein at least one of the relative thicknesses of the respective layers and the refractive indices of the respective layers are arranged so that the light having the second wavelength undergoes fewer internal reflections than the light having the first wavelength as the light is guided from the first in-coupling diffractive means or the second in-coupling diffractive means towards the one or more out-coupling diffractive means.

12. An apparatus as claimed in claim 11 wherein the first in-coupling diffractive means and at least part of the one or more out-coupling diffractive means are provided on a surface of a layer in the stack of layers.

13. An apparatus as claimed in any of claims 11 to 12 wherein the second in-coupling diffractive means and at least part of the one or more out-coupling diffractive means are provided on a surface of a layer in the stack of layers.

14. An apparatus as claimed in any preceding claim comprising one of more filters configured to filter a beam of light and provide the filtered beam of the light to the second in-coupling diffractive means.

15. A module, a device, a headset, a vehicle or cab for a vehicle comprising an apparatus as claimed in any preceding claim.
